Europäisches Patentamt

European Patent Office

Office européen des brevets

(19)

(11) Veröffentlichungsnummer: **0 288 541**
**B1**

(12) **EUROPÄISCHE PATENTSCHRIFT**

(45) Veröffentlichungstag der Patentschrift: **16.01.91**

(21) Anmeldenummer: **87907592.7**

(22) Anmeldetag: **03.11.87**

(86) Internationale Anmeldenummer:
**PCT/EP87/00661**

(87) Internationale Veröffentlichungsnummer:
**WO 88/03442 19.05.88 Gazette 88/11**

(51) Int. Cl.⁵: **B 05 C 5/04, B 29 B 13/02**

(54) **VORRICHTUNG ZUM AUFTRAGEN VON FLÜSSIGEN, PASTÖSEN ODER PLASTISCHEN SUBSTANZEN AUF EIN SUBSTRAT.**

(30) Priorität: **10.11.86 DE 3638307**

(43) Veröffentlichungstag der Anmeldung:
**02.11.88 Patentblatt 88/44**

(45) Bekanntmachung des Hinweises auf die
Patenterteilung:
**16.01.91 Patentblatt 91/03**

(84) Benannte Vertragsstaaten:
**CH DE FR GB IT LI NL**

(56) Entgegenhaltungen:
**DE-C-3 248 889**
**US-A-2 253 176**
**US-A-2 644 195**
**US-A-2 868 420**
**US-A-2 982 995**
**US-A-3 649 147**
**US-A-4 121 535**
**US-A-4 154 377**
**US-A-4 641 764**

(73) Patentinhaber: **Ludwig, Volker**
**Untere Mühlenwiesen**
**D-7896 Wutöschingen-Degernau (DE)**

(72) Erfinder: **Ludwig, Volker**
**Untere Mühlenwiesen**
**D-7896 Wutöschingen-Degernau (DE)**

(74) Vertreter: **Weiss, Peter, Dr. rer.nat.**
**Patentanwalt, Schlachthausstrasse 1, Postfach 466**
**D-7700 Singen a.H. (DE)**

**Beschreibung**

Die Erfindung betrifft eine Vorrichtung zum Auftragen von flüssigen, pastösen oder plastischen Substanzen, insbesondere von Thermoplasten, auf ein Substrat mit einer Einrichtung zum Aufschmelzen dieser Substanzen und einem Beschickungskopf zum Übertragen der aufgeschmolzenen Substanzen auf das Substrat über mindestens einen Düsenmund, wobei der Beschickungskopf als ein im Inneren eines perforierten Metallzylinders angeordneter Balken ausgebildet ist, dessen Innenfläche am Düsenmund vorbeistreicht.

Derartige Vorrichtungen werden beispielsweise in der Fixiereinlagentechnik benutzt, wobei ein thermoplastischer Klebstoff auf ein textiles Substrat aufgetragen und dieses textile Substrat mit einem weiteren Substrat verbunden wird. Solche Vorrichtungen werden aber auch beim Übertragen von Substanzen auf Papier od. dgl. Trägersubstrate verwendet.

In vielen Fällen findet heute ein balkenförmiger Beschickungskopf Anwendung, vor dessen Düsenmund ein Metallzylinder rotiert. Ähnliches wird in der DE-OS 32 48 889.0 gezeigt. Die durch die Perforationen des Metallzylinders auf das Substrat zu verbringenden Substanzen bleiben oftmals wegen der kurzen Berührungszeit des Substrates mit dem Metallzylinder nur innerhalb eines Spaltbereiches in den Perforationen hängen und werden nicht vom Substrat aufgenommen. Um dies zu verbessern, könnte beispielsweise die Substanz höher erwärmt und damit mehr verflüssigt werden, was aber wiederum dazu führt, daß sie zu tief in das Substrat eindringt und sogar zum Durchschlagen des Substrates führt.

Ferner wird in der DE-OS 32 48 889.0 aufgezeigt, daß der Bereich des Abhebepunktes des Substrates om Zylinder mit Heißluft von außen her angeblasen wird. Hierdurch soll ein sauberes Abreißen der Schmelzmasse beim Austritt aus den Perforationen des Zylinders gewährleistet werden, jedoch wird nicht das Austreten der Substanz aus dem Perforationsgebiet garantiert.

Der Erfinder hat sich zum Ziel gesetzt, eine Vorrichtung der oben genannten Art zu entwickeln, bei welcher ein Übertragen der Substanzen auf das Substrat gewährleistet ist, wobei die Eindringtiefe gesteuert werden kann. Weitere Verbesserungen sollen die Ausbildung des Beschickungskopfes betreffen.

Zur Lösung dieser Aufgabe führt, daß dem Düsenmund im Inneren des Metallzylinders eine Luftdüse nachfolgt, welche zum Metallzylinder hin einen von Lippen begrenzten Düsenspalt ausbildet.

Durch diese Luftdüse werden die Substanzen, welche von dem Düsenmund in die Perforationen des Metallzylinders hineingedrückt wurden, ausgeblasen. Dieses Ausblasen geschieht unabhängig davon, ob die Substanzen bereits eine Verbindung mit dem zu beschichtenden Substrat eingegangen sind. Damit wird gewährleistet, daß die Substanzen auf jeden Fall auf das Substrat gelangen und nicht etwa in den Perforationen verbleiben.

Weiterhin ist vorgesehen, daß das Substrat den Metallzylinder vor und/oder nach dem Düsenmund bis zur Luftdüse hin umschlingt. D.h., das Substrat steht mit dem Metallzylinder nicht nur in einem kurzen Spalt in Kontakt, sondern über eine längere Strecke hinweg, so daß sich die Substanz mit dem Substrat verbinden kann bzw. das Substrat vorher erwärmt werden kann.

Insbesondere zur Steuerung der Eindringtiefe soll zwischen Düsenmund und Luftdüse außerhalb des Metallzylinders eine Kühl- bzw. Heizstrecke angeordnet sein. Liegt beispielsweise die Substanz in sehr flüssiger Form vor, so kann dies zu einem Durchschlagen der Substanz durch das zu beschichtende Substrat führen, was in vielen Fällen unerwünscht ist. Wird dagegen die Substanz nach dem Düsenmund gekühlt, so kann ein derartiges Durchschlagen verhindert werden. Umgedreht ist es möglich, daß Substanzen, welche bereits wieder in einen festeren Aggregatzustand übergegangen sind und sich damit nur schwer an das Substrat anheften, durch Zugabe von Wärme wieder angeschmolzen werden, so daß sie sich mit dem Substrat verbinden können.

Bislang war es üblich, daß das mit der Substanz belegte Substrat nach dem Beschickungskopf wieder aufgerollt und erst später mit einem weiteren Substrat verbunden wurde. Bei der erfindungsgemäßen Vorrichtung soll jedoch dem Beschickungskopf bzw. dem Metallzylinder ein Kalanderwalzenpaar nachgeschaltet sein, in welchem das mit der Substanz beschichtete Substrat gleich mit einem weiteren Substrat verbunden wird.

Sowohl Luftdüse wie auch ggfs. Kalanderwalzenpaar sind erfindungsgemäß entlang dem Umfang des Metallzylinders verstellbar bzw. verschiebbar ausgebildet.

Auch der Beschickungskopf selbst ist erheblich verbessert worden. In einem Ausführungsbeispiel steht der Düsenmund über eine Schlitzdüse mit einem Ringkanal im Inneren des Balkens in Verbindung. Dieser Ringkanal wird von einer Axialbohrung in dem Balken gebildet, in die ein Rohr eingesetzt ist. Dabei steht das Rohr über einen Auslaß mit einem Spaltauslaß eines weiteren Förderrohres in Verbindung. Dieser Spaltauslaß soll bevorzugt veränderbar sein, wozu der Einfachheit halber ein Exzenter angeordnet ist. Hierdurch wird auch bei unterschiedlicher Menge von herangefördertem Substanzmaterial ein konstanter Druck im Düsenbereich aufrecht erhalten, wodurch wiederum eine Regulierung der Eindringtiefe der Substanz erfolgen kann.

Zwischen dem Rohr und dem Förderrohr soll ein Wärmeträger geführt werden, der bevorzugt wiederum aus Thermalöl besteht. Die große Wärmetauscherfläche des Förderrohres gewährleistet eine genaue Temperaturführung.

Der Düsenmund soll bevorzugt von zwei Profilstreifen gebildet sein, welche die Innenwand des Metallzylinders bestreichen. Hierbei schneidet der dem Düsenmund nachfolgende Profilstreifen die in die Perforation des Metallzylinders eindringende Substanzmenge ab, so daß möglichst wenig Substanz zwischen den einzelnen Perforationen, die in der Regel mit einem Innengrat versehen sind, verschmiert wird.

Dieser Balken ist erfindungsgemäß mit dem Düsenmund nach oben zum Metallzylinder hin ausgerichtet. Wird beispielsweise zum Reinigen des Metallzylinders oder des Balkens der Balken aus dem Metallzylinder herausgefahren, so kann im Düsenmund noch vorhandene Substanz nicht abtropfen. Es erübrigt sich eine getrennte Abdichtung des Düsenmundes. Hierzu dient auch eine weitere Entlastungsöffnung.

In einer weiteren Ausführungsform des Beschickungskopfes ist dem Düsenmund ein Raum vorgeschaltet, in welchem zwei Walzen gegenläufig drehend angeordnet sind. Diese Walzen sind an ihrer Mantelfläche mit Zahnungen versehen, die ineinandergreifen. Hierdurch kann einmal die Menge der zum Düsenmund geförderten Substanz portioniert werden. Damit zusammenhängend kann auch der Druck auf die Substanz kurz vor dem Düsenmund erhöht oder erniedrigt werden. Ferner ist es möglich, die Substanz im Düsenmund gänzlich von Druck zu entlasten, indem die Walzen in entgegen der Förderrichtung laufende Drehung versetzt werden.

Ein weiteres Ausführungsbeispiel eines Beschickungskopfes wirkt selbst als Einrichtung zum Aufschmelzen der Substanzen, wobei im Beschickungskopf eine Förderschnecke vorgesehen ist, über welche die noch nicht aufgeschmolzene Substanz in Seitenkanäle des Beschickungskopfes eingebracht werden kann. Der gesamte Beschickungskopf ist beheizt, so daß die Substanz in den Seitenkanälen aufschmilzt und über entsprechende Bohrungen, Sammelräume, Zulaufkanäle od. dgl. zum Düsenmund fließen kann.

Um hier auf einfache Weise die auszubringende Substanz unter Druck zu setzen, kann es genügen, dem Düsenmund den oben genannten Raum mit den oben beschriebenen Walzen vorzuschalten. Diese letzte Ausführungsform kann nur bei bestimmten Substanzen Anwendung finden, sie soll hier aber wegen ihres insgesamt sehr einfachen Aufbaus nicht unerwähnt bleiben.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in

Fig. 1 eine schematische Darstellung von zusammenwirkenden Elementen einer Vorrichtung zum Auftragen von flüssigen, plastischen oder pastösen Substanzen auf ein Substrat mit einem im Querschnitt dargestellten Beschickungskopf;

Fig. 2 einen Querschnitt durch eine weitere Ausführungsform eines Beschickungskopfes.

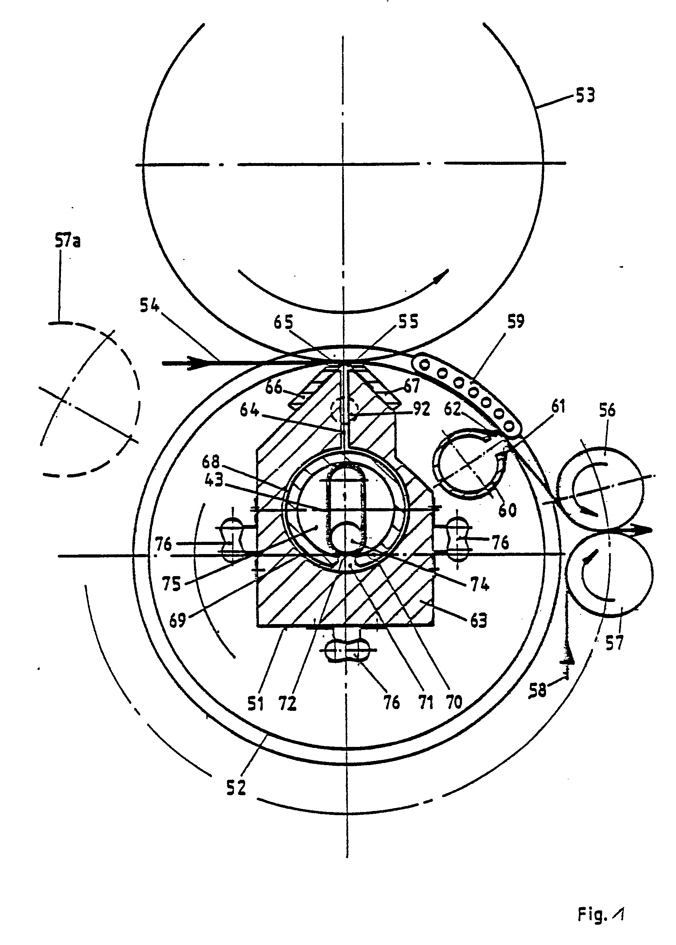

Ein erfindungsgemäßer Beschickungskopf 51 ist in Fig. 1 in einem sich drehenden, perforierten Metallzylinder 52 angeordnet. Dieser Metallzylinder 52 wirkt mit einer Gegenwalze 53 zusammen, wobei das zu beschichtende Substrat 54 in diesem gezeigten Ausführungsbeispiel einen Spalt 55 zwischen Metallzylinder 52 und Gegenwalze 53 durchläuft, auch den Metallzylinder 52 umschlingt und sodann zwischen zwei Kalanderwalzen 56 und 57 mit einem weiteren Substrat 58 in innigen Kontakt gebracht wird. Erfindungsgemäß ist vorgesehen, daß über eine Verstellung der Kalanderwalzen 56 und 57 bis hin zur gestrichelt angedeuteten Kalanderwalze 57a ein Verstellen des Bereiches möglich ist, mit dem das Substrat 54 den Metallzylinder 52 umschlingt. Selbstverständlich kann auch zu einer gewissen Vorerwärmung das Substrat 54 schon von Einlaufen in den Spalt 55 an den Metallzylinder 52 angelegt sein.

Nach dem Spalt 55 ist erfindungsgemäß eine nur schematisch dargestellte Kühl- bzw. Heizstrecke 59 vorgesehen. Mittels dieser Kühl- bzw. Heizstrecke 59 kann die Eindringtiefe der von dem Beschickungskopf 51 durch den perforierten Metallzylinder auf das Substrat 54 aufgebrachten Substanzpunkte bestimmt werden.

Im vorliegenden Ausführungsbeispiel ist nahe der Kühl- bzw. Heizstrecke 59 in dem rotierenden Metallzylinder 52 eine Luftdüse 60 dargestellt, welche einen zum Metallzylinder 52 hin gerichteten Düsenspalt 61 aufweist, der zudem von Lippen 62 begrenzt ist. Mit dieser Luftdüse 60 werden die auf das Substrat zu übertragenden Punkte aus den Perforationen des Metallzylinders 52 ausgeblasen. Je nach Wunsch kann das Medium für die Luftdüse 60 heiß oder kalt sein. Auch die Lage der Luftdüse 60 im Verhältnis zum Spalt 55 bzw. zur Kühl- bzw. Heizstrecke 59 ist verstellbar, je nach Wunsch, wann ein endgültiges Übertragen der Substanzpunkte erfolgen soll. Auch hierdurch wird im wesentlichen das Eindringen eines Substanzpunktes in das Substrat bestimmt. Wird beispielsweise ein tieferes Eindringen des Substanzpunktes in das Substrat gefordert, so daß möglicherweise dieser Punkt sogar durchschlägt, so wird die Strecke 59 als Heizstrecke wirken. Soll dagegen ein Durchschlagen verhindert, sondern nur eine oberflächige Haftung des Substanzpunktes am Substrat erzeugt werden, so wird die Strecke 59 als Kühlstrecke eingesetzt.

Der Beschickungskopf 51 besteht aus einem Balken 63, der sich über die gesamte axiale Länge des Metallzylinders 52 hinziehen kann. Dabei weist der Balken 63 eine nach oben gerichtete Schlitzdüse 64 auf, aus welcher das Substrat in die Perforationen des Metallzylinders 52 austreten kann.

Die Schlitzdüse 64 wird an ihrem Düsenmund 65 von zwei Profilstreifen 66 und 67 begrenzt, wobei der Profilstreifen 67 die in die Perforationen des Metallzylinders 52 eingetretene Substanz abschneidet und auch einen gewissen Schleifeffekt auf die Innenwand des Metallzylinders 52 ausübt.

Durch die Erzeugung der Perforationen in dem Metallzylinder 52 bilden sich erfahrungsgemäß Grate, welche von der Substanz im Laufe der Zeit zugeschmiert werden oder oxidieren. Deshalb sollte diese Innenwand vor Ingebrauchnahme des Metallzylinders 52 ausgeschliffen oder mit Teflon oder mit Silikon beschichtet werden, so daß eine gänzlich glatte Innenfläche entsteht. Aus Gründen der Temperaturmessung und der Nichtbenetzbarkeit des Metallzylinders 52 sollte dieser außen und auch die Innenwand der Löcher teflonisiert werden.

Die Schlitzdüse 64 mündet im Inneren des Balkens 63 in einen Ringkanal 68, welcher von einer Axialbohrung 69 im Balken 63 sowie einem darin eingesetzten Rohr 70 gebildet ist. Dieses Rohr 70 weist einen schlitzförmigen Auslaß 71 zum Ringkanal 68 hin auf, wobei dieser Auslaß 71 andererseits mit einem Spaltauslaß 72 eines weiteren Förderrohres 73 in Verbindung steht. Über dieses Förderrohr 73 wird aufgeschmolzene Substanz herantransportiert, wobei der Spaltauslaß 72 verschließbar bzw. veränderbar ist. Hierzu ist ein Exzenter 74 vorgesehen.

Das Förderrohr 73 und das Rohr 70 bilden miteinander Heizkanäle 75, in welchen ein Wärmeträger geführt ist. Als Wärmeträger wird bevorzugt Thermalöl verwendet. Diese Heizkanäle 75 bilden eine große Wärmetauscherfläche, wodurch die Temperaturführung innerhalb des Balkens 63 erheblich genauer ist.

Zusätzlich sind um den Balken 63 herum weitere regelbare Heizeinrichtungen 76 vorgesehen, welche den Metallzylinder 52 mit Wärme beaufschlagen.

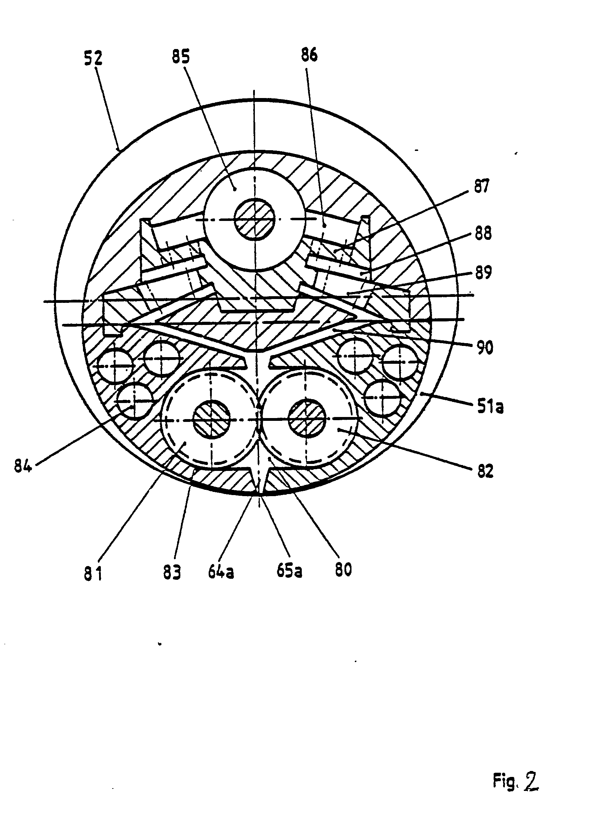

Ein weiterer erfindungsgemäßer Beschickungskopf 51a ist in Figur 2 in einem schematisch angedeuteten Metallzylinder 52 dargestellt. Bei diesem Beschickungskopf 51a ist vor der Schlitzdüse 64a eine Kammer 80 vorgesehen, in welcher zwei Walzen 81 und 82 gegenläufig drehen. Diese Walzen 81 und 82 sind an ihrer Mantelfläche jeweils mit einer axialen Zahnung 83 belegt, wobei beide Zahnungen 83 der Walzen 81 und 82 ineinandergreifen. Hierdurch ist eine Portionierung der zur Schlitzdüse 64 geförderten Substanz möglich. Diese Anordnung erlaubt aber auch, beim Umschalten der Walzen 81 und 82 in die entgegengesetzte Drehrichtung die Schlitzdüse 64a von einem Druck zu entlasten, wodurch ein Heraustropfen von Substanz aus dem Düsenmund 65a vermieden wird.

Der gesamte Beschickungskopf 51a ist von Heizpatronen oder Heizkanälen 84 durchzogen. Dadurch ermöglicht diese Ausführungsform von dem Beschickungskopf ein Aufschmelzen der Substanz erst im Beschickungskopf 51a selbst. Die beispielsweise als granuliertes Material vorliegende Substanz kann über eine Förderschnecke herangebracht werden. Es fällt dann in Seitenkanäle 86 und gerät dort in innigen Kontakt mit der beheizten Beschickungskopfwand. Aufgeschmolzene Substanz gelangt dann über Bohrungen 87 zu weiteren Sammelräumen 88 und 89 und von dort in einen Zulaufkanal 90, der oberhalb der Walzen 81 und 82 in den Raum 80 einmündet.

In einem weiteren, nicht gezeigten Ausführungsbeispiel der Erfindung soll statt der Gegenwalze 53 gemäß Figur 1 ein zweiter Beschickungskopf mit Metallzylinder angeordnet sein, dessen Düsenmund gegenüber dem Düsenmund 64 liegt. Hierdurch ist es möglich, ein Substrat, welches ein Durchschlagen von Substanz nicht erlaubt, beidseits mit Substanz zu beaufschlagen, so daß es beidseitig mit einem weiteren Substrat belegt werden kann. Durch genaue Steuerung der Walzen müssen die Substanzpunkte genau übereinanderliegen.

Erfindungsgemäß kann der Düsenschlitz 64 stirnseitig mit der gestrichelt angedeuteten Entlastungsöffnung 92 versehen sein, die verschließbar ist. Über die Entlastungsöffnung 92 kann der Restdruck vom Düsenmund 65 genommen werden, aber auch vor dem eigentlichen Anfahren Substanz eingefüllt oder entnommen oder die Temperatur gemessen werden.

Im übrigen kann auch ohne Gegenwalze 53 gearbeitet werden, wobei das Substrat 54 nur straff im Bereich des Spaltes 55 bzw. den angrenzenden Mantelbereichen des Metallzylinders geführt ist. Dies hat den zusätzlichen Vorteil, daß sich das Substrat 54 beim Aufbringen der Substanzpunkte etwas vom Metallzylinder 52 abhebt und somit mehr Substanz aufgetragen werden kann.

**Patentansprüche**

1. Vorrichtung zum Auftragen von flüssigen, pastösen oder plastischen Substanzen, insbesondere von Thermoplasten, auf ein Substrat mit einer Einrichtung zum Aufschmelzen dieser Substanzen und einem Beschickungskopf zum Übertragen der aufgeschmolzenen Substanz auf das Substrat über mindestens einen Düsenmund, wobei der Beschickungskopf als ein im Inneren eines perforierten Metallzylinders angeordneter Balken ausgebildet ist, dessen Innenfläche am Düsenmund vorbeistreicht,

dadurch gekennzeichnet,

daß dem Düsenmund (65) im Inneren des Metallzylinders (52) eine Luftdüse (60) nachfolgt, welche zum Metallzylinder (52) hin einen von Lippen (62) begrenzten Düsenspalt (61) ausbildet.

2. Vorrichtung nach Anspruch 1, dadurch gekennzeichnet, daß das Substrat (54) den Metallzylinder (52) nach dem Düsenmund (65) bis zur Luftdüse (60) hin umschlingt.

3. Vorrichtung nach Anspruch 1 oder 2, dadurch gekennzeichnet, daß zwischen Düsenmund (65) und Luftdüse (60) außerhalb des Metallzylinders (52) eine Kühl- bzw. Heizstrecke (59) angeordnet ist.

4. Vorrichtung nach einem der Ansprüche 1 bis 3, dadurch gekennzeichnet, daß nach der Luftdüse (60) das Substrat (54) ein Kalanderwalzenpaar (56, 57) zusammen mit einem weiteren zu verbindenden Substrat (58) durchläuft.

5. Vorrichtung nach Anspruch 3 oder 4, dadurch gekennzeichnet, daß Luftdüse (60) und/oder Kalanderwalzenpaar (56, 57) entlang dem Metallzylinder (52) verstellbar angeordnet ist/sind.

6. Vorrichtung nach wenigstens einem der Ansprüche 1 bis 5, dadurch gekennzeichnet, daß der Düsenmund (65) über eine Schlitzdüse (64) mit einem Ringkanal (68) im Inneren des Balkens (63) in Verbindung steht, welcher von einem mit radialem Abstand in eine Axialbohrung (69) eingesetztem Rohr (70) gebildet ist.

7. Vorrichtung nach Anspruch 6, dadurch gekennzeichnet, daß das Rohr (70) über einen Auslaß (71) mit einem Spaltauslaß (72) eines Förderrohres (73) in Verbindung steht.

8. Vorrichtung nach Anspruch 7, dadurch gekennzeichnet, daß der Spaltauslaß (72) beispielsweise mittels eines Exzenters (74) veränderbar ist.

9. Vorrichtung nach Anspruch 7 oder 8, dadurch gekennzeichnet, daß zwischen Rohr (70) und Förderrohr (73) Heizkanäle (75) ausgebildet sind, in denen ein Wärmeträger, beispielsweise Thermalöl, führbar ist.

10. Vorrichtung nach wenigstens einem der Ansprüche 1 bis 9, dadurch gekennzeichnet, daß der Balken (63) mit dem Düsenmund (65) nach oben zum Metallzylinder hin ausgerichtet ist.

11. Vorrichtung nach wenigstens einem der Ansprüche 1 bis 10, dadurch gekennzeichnet, daß im Beschickungskopf (51a) die Substanz Seitenkanäle (86) durchfließt, welche mit Wärme beaufschlagbar sind, und daß die aufgeschmolzene Substanz ggfs. über Bohrungen (87), Sammelräume (88, 89) und Zulaufkanäle (90) zum Düsenmund (65a) fließt.

## Revendications

1. Dispositif d'application de substances fluides, pâteuses, plastiques, spécialement thermoplastiques, sur un substrat à l'aide d'un dispositif permettant de faire fondre ces substances et une tête de chargement permettant l'application de la substance fondue sur le substrat par l'intermédiaire d'au moins une embouchure d'injecteur. A ce niveau, la tête de chargement est constituée par une barre de support placée à l'intérieur d'un cylindre métallique perforé, dont la surface intérieure est balayée par l'embouchure de l'injecteur, caractérisé en ce qu'une buse d'air (60) et placée après l'embouchure de l'injecteur (65) à l'intérieur du cylindre métallique (52). L'espace laissé libre entre la buse d'air (60) et le cylindre métallique (52) constitue une fente d'injection (61) limitée par les lèvres (62).

2. Dispositif selon la revendication 1, caractérisé en ce que le substrat (54) s'enroule sur le cylindre métallique (52) entre l'embouchure de l'injecteur (65) et la buse d'air (60).

3. Dispositif selon les revendications 1 ou 2, caractérisé en ce que, entre l'embouchure de l'injecteur (65) et la buse d'air (60), du côté extérieur du cylindre (52), se trouve un tronçon de refroidissement ou de chauffage (59).

4. Dispositif selon l'une des revendications 1 à 3, caractérisé en ce que, après la buse d'air (60), le substrat (54) passe à travers une paire de cylindres de calandre (56, 57) en même temps qu'un autre substrat (58) destiné à être relié au premier.

5. Dispositif selon l'une des revendication 3 ou 4, caractérisé en ce que la buse d'air (60) et/ou la paire de cylindres de calandre (56, 57) est/sont susceptible(s) d'être réglée(s) le long du cylindre métallique (52).

6. Dispositif selon l'une ou plusieurs des revendications 1 à 5, caractérisé en ce que l'embouchure de l'injecteur (65) est mis en communication, par l'intermédiaire d'un conduit en forme de fente (64) à un canal circulaire (68) situé à l'intérieur même de la barre de support (63); ce canal est constitué par un tube (70) placée dans un alésage axial (69), présentant un intervalle radial.

7. Dispositif selon la revendication 6, caractérisé en ce que le tube (70) communique par une décharge (71) à la fente de décharge (72) d'une tuyauterie d'alimentation (73).

8. Dispositif selon la revendication 7, caractérisé en ce que la fente de décharge (72) est réglable au moyen d'un excentrique (74).

9. Dispositif selon les revendications 7 ou 8, caractérisé en ce qu'entre le tube (70) et la tuyauterie d'alimentation (73) sont disposés des conduits de chaleur dans lesquels peut circuler un agent caloporteur comme par exemple de l'huile thermique.

10. Dispositif selon une ou plusieurs des revendications 1 à 9, caractérisé en ce que la barre de support (63) est équipée d'une embouchure d'injecteur (65) tournée vers la partie supérieure du cylindre métallique.

11. Dispositif selon une ou plusieurs des revendications 1 à 10, caractérisé en ce que dans la tête de chargement (51a), la substance s'écoule à travers les canaux latéraux (86), et que la substance, ayant le cas échéant fondu, coule vers l'embouchure de l'injecteur (65a), à travers les alésages (87), les chambres collectrices (88, 89) et les canaux d'adduction (90).

## Claims

1. Device for applying liquid, pasty or plastic substances, in particular thermoplastic materials, to a substrate comprising an arrangement for melting these substances and a charging head for transferring the molten substance on to the substrate via at least one nozzle orifice, the charging head being constructed as a beam which is arranged in the interior of a perforated metal cylinder and of which the internal surface rubs past the nozzle orifice, characterised in that the nozzle orifice (65) in the interior of the metal cylinder (2) is followed by an air nozzle (60) forming a nozzle slot (61) limited toward the metal cylinder (52) by lips (62).

2. Device according to claim 1, characterised in that the substrate (54) contacts the metal cylinder (52) after the nozzle orifice (65) up to the air nozzle (60).

3. Device according to claim 1 or 2, characterised in that a cooling and heating zone (59) is arranged between nozzle orifice (65) and air nozzle (60) outside the metal cylinder (52).

4. Device according to one of claims 1 to 3, characterised in that after the air nozzle (60) the substrate (54) passes, together with a further substrate (58) to be attached, through a pair of calender rolls (56, 57).

5. Device according to claim 3 or 4, characterised in that the air nozzle (60) and/or pair of calender rolls (56, 57) is/are adjustably arranged along the metal cylinder (52).

6. Device according to at least one of claims 1 to 5, characterised in that the nozzle orifice (65) communicates via a slit nozzle (64) with an annular channel (68) in the interior of the beam (63) formed by a tube (70) inserted with radial spacing into an axial bore (69).

7. Device according to claim 6, characterised in that the tube (70) communicates via an outlet (71) with a slot outlet (72) of a conveying tube (73).

8. Device according to claim 7, characterised in that the slot outlet (72) can be varied, for example by means of a cam (74).

9. Device according to claim 7 or 8, characterised in that heating ducts (75) in which a heat carrier, for example hot oil, can be guided is constructed between tube (70) and conveying tube (73).

10. Device according to at least one of claims 1 to 9, characterised in that the beam (63) with the nozzle orifice (65) is orientated upwardly toward the metal cylinder.

11. Device according to at least one of claims 1 to 10, characterised in that in the charging head (51a) the substance flows through lateral channels (86) to which heat can be applied and the molten substance flows to the nozzle orifice (65a) optionally via bores (87), collecting chambers (88, 89) and supply channels (90).

Fig. 1

1

Fig. 2